# EUROPEAN PATENT SPECIFICATION

(11) **EP 2 348 874 B1**
(45) Date of publication and mention of the grant of the patent: **11.10.2017**
(21) Application number: 09740517.9
(22) Date of filing: 21.10.2009
(51) Int. Cl.: A23G 3/34, A23G 1/54, A23G 1/00

(54) **PROCESS FOR THE PREPARATION OF CENTRE-FILLED CHOCOLATE PRODUCTS**
VERFAHREN ZUR HERSTELLUNG VON MITTIG GEFÜLLTEN SCHOKOLADEPRODUKTEN
PROCÉDÉ DE PRÉPARATION DE PRODUITS AU CHOCOLAT FOURRÉS

(30) Priority: 27.10.2008 GB 0819683
(43) Date of publication of application: 03.08.2011
(73) Proprietor: Mondelez UK Holdings & Services Limited, Uxbridge, Middlesex UB8 1DH (GB)
(72) Inventor: McLEOD, Emma, Jane, West Midlands B47 6JQ (GB); SKIDMORE, Nathaniel, James, Uxbridge UB8 1DH (GB)
(74) Representative: Ward, David Ian
(86) International application number: PCT/GB2009/002516
(87) International publication number: WO 2010/049671

(56) References cited:
- EP-A1- 1 714 559
- EP-A1- 1 825 760
- WO-A1-02/15707
- WO-A1-2008/051861
- WO-A1-2008/079927
- WO-A2-2007/087294
- US-A- 5 425 957

## Description

The present invention relates to an improved one-shot process for the preparation of chocolate products having a confectionery filling, in particular a viscous confectionery filling.

Moulded chocolates having a centre-fill material can be conventionally made using a specialised depositor known as a "one-shot" depositor in which the chocolate shell is deposited through the same nozzle as the centre-fill. Typically, a one-shot depositor comprises inner and outer concentric nozzles such that the chocolate flows through the outer nozzle and the centre-fill flows through the inner nozzle. The chocolate and the centre-fill are deposited into a mould tray so that the exposed surface of the chocolate, not directly contacting the mould cavity, becomes the bottom of the finished product. The mould tray is usually transferred to a cooling tunnel to harden the chocolate and the products are subsequently removed from the mould and wrapped if desired.

One-shot depositing is an alternative to traditional shell moulding. Traditional shell moulding commonly requires three steps: the hollow chocolate shell is prepared, the filling is added and finally chocolate is deposited to cover the filled shell. The shell is usually prepared by injecting chocolate into a mould and then inverting the mould to remove excess chocolate. Traditional shell moulding has a number of drawbacks, including the large number of process steps.

It is an object of the present invention to provide an improved process for the production of centre-filled chocolate products and products made thereby. In particular, it is an object of the present invention to provide a process which is particularly suitable for the production of smaller centre-filled chocolate products.

According to a first aspect of the present invention, there is provided a one-shot process for the preparation of a centre-filled chocolate product comprising a chocolate shell and a centre-fill wherein a chocolate shell material and a centre-fill material are at least partially co-deposited onto a planar surface to form a precursor, wherein the precursor is not confined by the walls of a mould, the centre-fill material deposition temperature is the same as the chocolate shell material deposition temperature ±3°C and the density of the centre-fill is ±15% of the density of the chocolate shell material when measured at their deposition temperature; and the precursor is cooled to set the chocolate shell material and form the centre-filled chocolate product, wherein the precursor is subject to vibration before cooling. The chocolate shell material and the centre-fill material are deposited onto a substantially planar surface. This provides the advantage that the same surface can be employed to prepare chocolate products having different sizes and shapes thereby reducing the cost of apparatus. Further, the product does not need to be de-moulded at the end of the process and instead is easily removed from the surface. The term "at least partially co-deposited" is intended to mean that both materials will be deposited together at some point during deposition. The process may firstly deposit a small quantity of chocolate shell material onto the substantially planar surface. Secondly, the centre-fill material may be deposited at the same time as the chocolate shell material. Lastly, the chocolate shell material is deposited alone so as to ensure the shell material covers all of the centre-fill material.
One-shot depositing into moulds is well known and described in 'Chocolate, Cocoa, and Confectionery Science and Technology, Bernard W. Minifie, Third Edition page 204. It will be understood that one-depositing causes the entire centre-fill to be fully enclosed by the shell material. One-shot depositing differs from a co-extrusion process. A centre-filled product may be produced by co-extruding two materials to form a rope having a centre-fill extending therethrough but the centre-fill will be exposed at the ends of the rope. The rope can be pinched to fully enclose the centre-fill if desired.

The precursor is not confined by the walls of a mould so the shape of the resulting product is governed by the manner in which the precursor spreads out over the surface. This has been found to be determined by a number of factors including the viscosity of the chocolate shell material and the centre-fill material.

The precursor is subject to vibration (shake-down) before cooling. The vibration causes the precursor to spread out on the substantially planar surface and thereby increase its surface area. In the case of a precursor that is approximately disc-shaped, the vibration may cause an increase in diameter.

In a particular embodiment, the vibration is effected by the use of an eccentric weighted motor.

Vibration might be expected to be undesirable for the precursor since it has a centre-fill, especially since the precursor is not confined by a mould. WO2007087294 describes the preparation of centre-filled chocolate products by one-shot depositing into moulds and explains the problems associated with vibrating the moulding trays (paragraphs [0006] and [0031]). There is a risk of leakage of the centre-fill which would make the resulting product unattractive and possibly difficult to package since the product would stick to the packaging. If a number of products are packaged together, the individual products could stick to each another. Surprisingly, the inventors have discovered that vibration may be used to advantage to provide a consistent and substantially uniform product.

The chocolate shell material and the centre-fill material are deposited by a nozzle arrangement comprising concentric nozzles. A nozzle arrangement comprising one outer nozzle (to deposit the chocolate shell material) and one inner nozzle (to deposit the centre-fill material) may be employed to prepare a product having one centre-fill material. A nozzle arrangement comprising three or more concentric nozzles may be employed to prepare a product having two or more centre-fill materials. The nozzles may be adapted to impart decorative effects as is known in the art. For example, the outer nozzle may be adapted to deposit two chocolate shell materials in a swirled pattern and such a swirled pattern may be effected by at least partially rotating the nozzle during deposition. Similarly an inner nozzle may be adapted to deposit two centre-fill materials simultaneously.
Conveniently the process may be carried out using an array of such nozzle arrangements in order to prepare multiple products simultaneously.
The chocolate shell material and the centre-fill material may be spot deposited or ribbon deposited. If spot deposited, the resulting product will be approximately disc-shaped. A range of shapes may be prepared by ribbon depositing, for example straight strips, curved strips such as 'S' shapes and oval shapes.
The chocolate shell material and the centre-fill material may be deposited onto any suitable planar surface. In one embodiment, the substantially planar surface is cooled below room temperature. This provides an advantage in that the chocolate shell material sets more quickly than it would do otherwise. In a further embodiment, the planar surface is decorated with a raised pattern which results in an imprint on the underside of the product. The substantially planar surface may be made from a metal such as steel or aluminium, a plastics material, a stone material or paper or cardboard. In a certain embodiment, the substantially planar surface is a conveyer belt or the substantially planar surface is located upon a conveyer belt. In such an embodiment, the precursor may be moved using the conveyer belt to a different location, such as a cooling zone or tunnel, to set. Further, the product may be easily removed by allowing it to fall from the end of the conveyer belt.

In one embodiment, the product has a total mass of no more than 3.5g.

In other embodiments, the product has a total mass of less than 50g, less than 30g, less than 10g or less than 5g.

In a further embodiment, the centre-fill material comprises microcrystalline cellulose and/or carrageenan.
According to a second aspect of the invention, there is provided a one-shot deposited chocolate product (not part of the invention) comprising a shell and a centre-fill, the shell and the centre-fill comprising co-deposited chocolate shell material and centre-fill material respectively, wherein the total mass of the product is no more than 3.5g.
In one embodiment the centre-fill material comprises microcrystalline cellulose and/or carrageenan.
As discussed above, the product may comprise two or more centre-fill materials and the shell may comprise two or more chocolate shell materials. For example, the centre-fill material may consist of two fondant crèmes of different colours and/or the chocolate shell could consist of a swirled pattern of milk and white chocolate.
According to third aspect of the invention, there is provided a one-shot deposited chocolate product (not part of the invention) comprising a shell and a centre-fill, the shell and the centre-fill comprising co-deposited chocolate shell material and centre-fill material respectively, wherein the centre-fill material comprises microcrystalline cellulose and/or carrageenan. Microcrystalline cellulose (E4601) is an excipient normally used in the formulation of capsules and tablets. Carrageenan is a polysaccharide extracted from seaweed. It can be used as a thickener or stabilizer for food products. In the present invention, these additives are believed to act as binding agents to hinder leakage of the centre-fill material.
In one embodiment, the product has a total mass of no more than 3.5g.

In other embodiments, the product has a total mass of less than 50g, less than 30g, less than 10g or less than 5g.

As discussed above, the product may comprise two or more centre-fill materials and the shell may comprise two or more chocolate shell materials. For example, the centre-fill material may consist of two fondant crèmes of different colours and/or the chocolate shell could consist of a swirled pattern of milk and white chocolate.

The following comments apply to the products of any of the aspects of the invention.

In various embodiments, the product has a total mass of no more than 3.3g, no more than 3.0g, no more than 2.9g, no more than 2.8g, no more than 2.7g, no more than 2.6g, no more than 2.5g, no more than 2.4g, no more than 2.3g, no more than 2.2g, no more than 2.1g or no more than 2.0g. In a particular embodiment, the product has a mass of around 2.9g.

In a certain embodiment the product is generally disc-shaped. In a particular embodiment where the product is generally disc-shaped, the product has an upper surface and a lower surface wherein the upper surface is generally dome shaped and the lower surface is planar. In one such embodiment, the upper surface comprises a double dome-shape. The product may also exhibit 'tailing', a distinctive feature which often results from one-shot depositing. The 'tailing' or 'tail' results when the chocolate shell material forms a peak during deposition which then falls across the top of the product.

In a series of embodiments where the product is generally disc-shaped, the diameter of the product is no more than 50mm, no more that 40mm, no more than 30mm or no more than 20mm. In a further series of embodiments the diameter of the disc-shaped product is at least 10mm, at least 15mm, at least 20mm or at least 25mm.

In various embodiments the thickness of a disc-shaped product is no more than 20mm, no more that 15mm, no more than 10mm, no more than 8mm or no more than 5mm. In a further series of embodiments the disc-shaped product has a maximum thickness of at least 3mm, at least 5mm, at least 8mm or at least 10mm.

The centre-fill material is deposited and so must be liquid at the temperature of deposition. The properties of the centre-fill material may change over time. For example, the centre-fill material may be deposited at a certain viscosity and its viscosity may increase or decrease after storage.

The centre-fill material may be a confectionery material. A number of confectionery centre-fill materials will be apparent to the skilled addressee. In certain embodiments, the centre-fill material is a fat-based centre-fill material or a water-based centre-fill material. Suitable fat-based centre-fill materials include truffle, mousse, and chocolate. Suitable water-based centre-fill materials include caramel, fondant crème and gels such as Turkish delight. In one embodiment the centre-fill material is a liquid or flowable material at room temperature. For example, the centre-fill material may be a viscous liquid, such as a caramel, a fondant crème or a gel, such as Turkish delight. The centre-fill material may be aerated, for example, a mousse. The centre-fill material has a different composition from the chocolate shell material so that the centre-fill is distinguishable from the chocolate shell. In one embodiment, the chocolate shell material is a milk chocolate and the centre-fill material is a white chocolate.

The chocolate shell material and/or the centre-fill material may comprise various additions such as colourings, flavourings and small solid inclusions. Suitable solid inclusions will be apparent to the skilled addressee and will, amongst other things, include nut pieces, cereal pieces and popping candy. It will be understood that such inclusions will be deposited together with the chocolate shell material and/or centre-fill material and so must be suitably sized otherwise the apparatus would become clogged.

The term 'chocolate' in the context of the present invention is not restricted by the various definitions of chocolate provided by government and regulatory bodies. A chocolate shell material is simply a product that contains a fat phase and which is obtained from cocoa products and sweeteners.

The chocolate shell material may be a dark chocolate, a milk chocolate or a white chocolate.

The chocolate shell material comprises at least one fat. The fat may be cocoa butter, butterfat, a cocoa butter equivalent (CBE), a cocoa butter substitute (CBS), a vegetable fat that is liquid at standard ambient temperature and pressure (SATP, 25°C and 100kPa) or any combination of the above. In a particular embodiment, the chocolate shell material comprises cocoa butter.

CBEs are defined in Directive 2000/36/EC. Suitable CBEs include illipe, Borneo tallow, tengkawang, palm oil, sal, shea, kokum gurgi and mango kernel. CBE's are usually used in combination with cocoa butter. In one embodiment, the chocolate shell material comprises no more than 5wt% CBE's.

The chocolate shell material may comprise a cocoa butter substitute (CBS) (sometimes known as a cocoa butter replacer, CBR) in place of some or all of the cocoa butter. Such chocolate materials are sometimes known as compound chocolate. Suitable CBS's include CBS laurics and CBS non-laurics. CBS laurics are short-chain fatty acid glycerides. Their physical properties vary but they all have triglyceride configurations that make them compatible with cocoa butter. Suitable CBS's include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS nonlaurics include soya, cottonseed, peanut, rapeseed and corn (maize) oil.

The chocolate shell material may comprise at least one vegetable fat that is liquid at standard ambient temperature and pressure (SATP, 25°C and 100kPa). Suitable vegetable fats include corn oil, cotton seed oil, rapeseed oil, palm oil, safflower oil, and sunflower oil.

The present invention is further applicable to chocolate shell materials in which some or all of the fat is constituted by a partly or wholly non-metabolisable fat, for example Caprenin.

The product may comprise one or more centre-fill materials. In an embodiment where the product has more than one centre-fill material, the centre-fill materials may be arranged inside one another or layered on top of one another or located side-by-side.

The chocolate shell may comprise more than one chocolate shell material. In one embodiment, the chocolate shell comprises two chocolate shell materials with different appearances. For example, the chocolate shell may comprise both milk chocolate and white chocolate in a swirled pattern.

The ratio of the mass of the chocolate shell to the mass of the centre-fill may be varied. In various embodiments, the ratio of the mass of the chocolate shell to the mass of the centre-fill is from 66:34 to 95:5, from 70:30 to 90:10 or from 75:25 to 80:20.

In a certain embodiment, the chocolate shell material is deposited at a temperature of from 25 to 40°C or from 28 to 35°C.

In a certain embodiment, the chocolate shell material has a density of from 1.2 to 1.3g/cm³ when measured at standard ambient temperature and pressure (25°C and 100kPa, SATP). In a further embodiment, the chocolate shell material has a density of from 1.2 to 1.3kg/cm³ at the temperature of deposition.

In a certain embodiment, the chocolate shell material has a tempered viscosity of from 10 to 70Pas, from 20 to 60Pas, from 25 to 55Pas, from 55 to 65Pas or from 35 to 50Pas at the temperature of deposition when measured at a shear rate of 3.7s⁻¹.

In a certain embodiment, the centre-fill material is deposited at a temperature of from 20 to 35°C or from 25 to 32°C.

In a certain embodiment, the centre-fill material has a density of from 0.4 to 1.3 or from 1.0 to 1.3g/cm³ when measured at standard ambient temperature and pressure (25°C and 100kPa, SATP). In a further embodiment, the centre-fill material has a density of from 0.4 to 1.7g/cm³, 0.6 to 1.6g/cm³, 0.7 to 0.55g/cm³, 0.8 to 1.5g/cm³, 0.8 to 1.45g/cm³, 0.9 to 1.45g/cm³, 1.0 to 1.4g/cm³, 1.1 to 1.35 g/cm³ or from 1.2 to 1.3g/cm³ at the temperature of deposition.

In a certain embodiment, the centre-fill material has a viscosity of from 10 to 170Pas, from 15 to 160Pas, from 30 to 150Pas, from 50 to 140Pas, from 70 to 130Pas or from 60 to 100Pas when measured at standard ambient temperature and pressure (25°C and 101.325kPa, SATP) at a shear rate of 3.7s⁻¹. In a further embodiment, the centre-fill material has a viscosity of from 10 to 170Pas, from 15 to 160Pas, from 30 to 150Pas, from 50 to 140Pas, from 70 to 130Pas, from 20 to 60Pas, from 30 to 55Pas or from 35 to 50Pas at the temperature of deposition when measured at a shear rate of 3.7s⁻¹.

It has been found to be important to match the properties of the centre-fill material to the properties of the chocolate shell material, so as to obtain the best possible product. It is proposed that the centre-fill is more likely to settle in the middle of the chocolate shell, and therefore less likely to leak, if the properties are accurately matched. The protocol used to assess shear rate has been chosen to reflect the rate experienced by the chocolate shell material and centre-fill material during deposition. It was therefore assessed that 3.7s⁻¹ is an appropriate shear rate which provides an accurate comparison.

In a particular embodiment, the centre-fill material is deposited at a temperature correlated to the chocolate shell material deposition temperature. In such an embodiment the centre-fill material deposition temperature is substantially the same as the chocolate shell material deposition temperature +/- 3°C, +/- 2°C, or +/-1°C.

In a particular embodiment, the density of the centre-fill material is correlated to that of the chocolate shell material. In such an embodiment the density of the centre-fill material is +/-15%, +/-10% or +/- 5% of the density of the chocolate shell material when measured at SATP. In a further embodiment, the density of the centre-fill material is +/-15%, +/-10% or +/-5% of the density of the chocolate shell material when measured at their respective deposition temperatures.

In a particular embodiment, the viscosity of the centre-fill material is correlated to that of the chocolate shell material. In such an embodiment the viscosity of the centre-fill material is +/- 50%, +/-25%, +/-15%, +/-10% or +/- 5% of the viscosity of the chocolate shell material when measured at SATP. In a further embodiment, the viscosity of the centre-fill material is +/-50%, +/-25%, +/-15%, +/-10% or +/- 5% of the viscosity of the chocolate shell material when measured at their respective deposition temperatures.

The centre-fill material may comprise additives to alter its properties.

The centre-fill material may comprise invert sugar to alter its viscosity. In various embodiments, the centre-fill comprises at least 5wt%, at least 8wt%, at least 10wt% or at least 20wt% invert sugar (based on dry weight of invert sugar). In various embodiments where the centre-fill comprises invert sugar, the centre-fill comprises no more than 25wt%, no more than 20wt%, no more than 15wt% or no more than 10wt% invert sugar (based on dry weight invert sugar).

The centre-fill material may comprise isoglucose to alter its viscosity. In various embodiments, the centre-fill comprises at least 5wt%, at least 8wt% or at least 10wt% isoglucose (based on dry weight of isoglucose). In various embodiments where the centre-fill comprises isoglucose, the centre-fill comprises no more than 20wt%, no more than 15wt% or no more than 10wt% isoglucose (based on dry weight of isoglucose).

The centre-fill may comprise glycerine to adjust the moisture content of the centre-fill. In various embodiments, the centre-fill comprises at least 5wt%, at least 8wt% or at least 10wt% glycerine (based on dry weight of glycerine). In various embodiments where the centre-fill comprises glycerine, the centre-fill comprises no more than 20wt%, no more than 15wt% or no more than 10wt% glycerine (based on dry weight of glycerine).

In various embodiments where the centre-fill material comprises microcrystalline cellulose, the centre-fill comprises less than 5wt%, less than 3wt%, less than 1wt%, less than 0.5wt% or less than 0.25wt% microcrystalline cellulose.

In various embodiments where the centre-fill material comprises carrageenan, the centre-fill comprises less than 1wt%, less than 0.5wt% or less than 0.25wt% carrageenan.

In one embodiment, the centre-fill material comprises invert sugar and microcrystalline cellulose. In a particular embodiment, the centre-fill material comprises caramel, invert sugar and microcrystalline cellulose.

Embodiments of the invention will now be described by way of example only with reference to the following figures.
Figure 1 is a photograph of a product in accordance with an embodiment of the invention which has been cut in half to reveal the centre-fill.
Figure 2 is a photograph of a product in accordance with a further embodiment of the invention.

**INGREDIENTS**

| | Viscosity measured at a shear rate of 3.7s⁻¹ (Pas) (temperature(°C)) | Density (g/cm³) |
|---|---|---|
| Milk Chocolate | 40 (29.5) | 1.24 |
| Caramel (containing 12wt% invert sugar having 80% D.S.) | 42 (32) | 1.26 |
| Flavoured gel (Turkish delight) | 42 (32) | 1.26 |

### METHODOLOGY

The chocolate was held in a hopper at a temperature of 29.5°C and the centre-fill materials (caramel and flavoured gel) were each held in hoppers at 32.0°C. The one-shot depositor had an array of 3 nozzle arrangements each having an inner nozzle (centre-fill) having a diameter of 4.5mm and an outer nozzle (chocolate) having a diameter of 7.5mm. Centre-filled chocolate products, similar in shape to Cadbury Buttons®, were deposited from a height of approximately 5mm onto a metallised cardboard plaque. The depositing was repeated 13 times to provide a total of 39 (13x3) centre-filled chocolate products. The plaques were then tapped firmly on a hard surface (vibration). The plaques were transferred to a cooling tunnel for 13 minutes at a temperature of 15°C and subsequently transferred to cold storage. The centre-filled chocolate products were later removed from the plaque.

It will be understood that this process was carried out on a trial scale and alternative methods would be carried out when preparing the products on a commercial scale.

### Example 1

Centre-filled chocolate products, each having a total mass of 3.5g, were prepared using one-shot depositing as described above. The product comprises 70% chocolate (shell) and 30% caramel (centre-fill). The product is disc-shaped having a diameter of 29mm and a maximum thickness of 9mm.

### Example 2

Centre-filled chocolate products, each having a total mass of 3.0g, were prepared using one-shot depositing as described above. The product comprises 75% chocolate (shell) and 25% caramel (centre-fill). The product is disc-shaped having a diameter of 25mm and a maximum thickness of 7mm.

### Example 3

Centre-filled chocolate products, each having a total mass of 2.5g, were prepared using one-shot depositing as described above. The product comprises 70% chocolate (shell) and 30% caramel (centre-fill). The product is disc-shaped having a diameter of 25mm and a maximum thickness of 6mm.

### Example 4

Centre-filled chocolate products, each having a total mass of 3.0g, were prepared using one-shot depositing as described above. The product comprises 70% chocolate (shell) and 30% flavoured gel centre (centre-fill). The product is disc-shaped having a diameter of 27mm and a maximum thickness of 6mm.

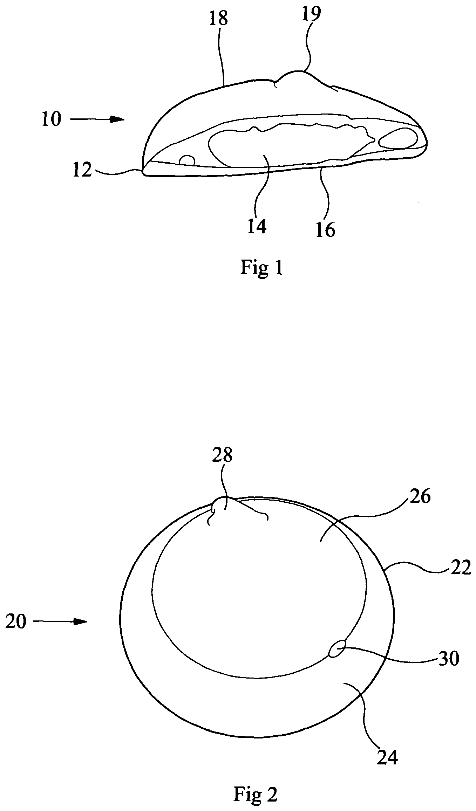

Figure 1 shows a chocolate product 10 as described in Example 2 comprising a chocolate shell 12 and a caramel filling 14. The product 10 has been cut in half so that the caramel filling 14 is clearly visible. It can be seen that the chocolate shell 12 has a flat lower surface 16 and a curved, generally dome-shaped upper surface 18. The upper surface 18 is not perfectly dome-shaped since there is some unevenness including some tailing 19. Tailing is a distinctive feature which often results from one-shot depositing. Figure 2 shows another chocolate product 20 as described in Example 2 comprising a chocolate shell 22 and a caramel centre-fill (not visible). The chocolate shell 22 has a double dome-shape which may be obtained by delaying the deposition of the caramel. The shell 22 is characterised in having a first (lower) dome-shaped portion 24 and a second (upper) dome-shaped portion 26. The first dome-shaped portion 24 has a flat lower surface (not shown). The second dome-shaped portion shows characteristic tailing 28 at its peak. A small air bubble 30 is visible at the boundary between the first and second dome-shaped portions (24,26). The air bubble 30 is not in contact with the centre-fill material and so does not result in leakage.

The one-shot process results in an uneven free (upper) surface which may have some 'tailing'. However, the manufacturing process can be optimised to reduce the occurrence of tailing if desired. When a number of products are prepared simultaneously, it will be noted that the products will not all be identical since each precursor will spread out and set in a slightly different way. When deposited onto a substantially planar surface, the underside of the product will be planar. In the case of a spot deposited product that is deposited onto a substantially planar surface, such as those shown in figures 1 and 2, the appearance will be similar to that of a standard chocolate buttons product (without a centre-fill) such as Cadbury Buttons®.

Accordingly centre-filled chocolate products may be produced easily using the process of the present invention. Similar products may be made using a conventional shell moulding techniques but shell moulding requires multiple steps and is therefore time consuming. This problem is exacerbated when preparing small products since a greater number of shells must be prepared and very small quantities deposited thereby making the process more onerous. Furthermore shell moulding is limited by the number of moulds in the appropriate size that are available and the speed at which the apparatus can process the moulds. This means that capacity cannot be easily increased. In contrast, the present process does not require moulds so products of different sizes and shapes can be prepared using the same apparatus. An array of nozzles (a multi-nozzle) one-shot depositor can be utilised to one-shot deposit a number of products simultaneously and the products can be closely packed on the planar surface.
The foregoing examples are not intended to limit the scope of protection afforded by the claims, but rather to describe examples as to how the invention may be put into practice.

## Claims

1. A one-shot process for the preparation of a centre-filled chocolate product comprising a chocolate shell and a centre-fill,
wherein a chocolate shell material and a centre-fill material are at least partially co-deposited onto a planar surface to form a precursor, wherein the precursor is not confined by the walls of a mould, the centre-fill material deposition temperature is the same as the chocolate shell material deposition temperature +/- 3°C and the density of the centre-fill material is +/-15% of the density of the chocolate shell material when measured at their deposition temperatures;
and the precursor is cooled to set the chocolate shell material and form the centre-filled chocolate product,
wherein the precursor is subject to vibration before cooling.

2. The process of claim 1, wherein the planar surface is a conveyer belt or the planar surface is located upon a conveyer belt.

3. The process of claim 1 or 2, wherein the density of the chocolate shell material is in the range of 1.2 to 1.3g/cm³ and/or wherein the density of the centre-fill material is in the range of 0.4 to 1.3g/cm³.

4. The process of any preceding claim, wherein the viscosity of the centre-fill material is +/- 50% of the viscosity of the chocolate shell material when measured at respective deposition temperatures.

5. The process of any preceding claim, wherein the centre-fill material has a viscosity of from 30 - 150Pas.

## Patentansprüche

1. Ein-Schritt-Verfahren zur Herstellung eines mittig gefüllten Schokoladenprodukts, umfassend einen Schokoladenummantelung und eine Mittenfüllung,
wobei ein Schokoladenummantelungsmaterial und ein Mittenfüllungsmaterial mindestens teilweise auf eine ebene Oberfläche gemeinsam abgeschieden werden, um ein Vorprodukt zu erzeugen, wobei das Vorprodukt durch die Wände einer Form nicht begrenzt ist, wobei die Abscheidungstemperatur des Mittenfüllungsmaterials die gleiche wie die Abscheidungstemperatur des Schokoladenummantelungsmaterials +/-3 °C ist und die Dichte des Mittenfüllungsmaterials +/-15% der Dichte des Schokoladenummantelungsmaterials ist, gemessen bei ihren Abscheidungstemperaturen; und
das Vorprodukt abgekühlt wird, um das Schokoladenummantelungsmaterial zu härten und das mittig gefüllte Schokoladenprodukt zu erzeugen,
wobei das Vorprodukt vor dem Abkühlen Vibrationen ausgesetzt wird.

2. Verfahren nach Anspruch 1, wobei die ebene Fläche ein Förderband ist oder die ebene Oberfläche sich auf einem Förderband befindet.

3. Verfahren nach Anspruch 1 oder 2, wobei die Dichte des Schokoladenummantelungsmaterials im Bereich von 1,2 bis 1,3 g/cm³ liegt und/oder wobei die Dichte des Mittenfüllungsmaterials im Bereich von 0,4 bis 1,3 g/cm³ liegt.

4. Verfahren nach einem der vorhergehenden Ansprüche, wobei die Viskosität des Mittenfüllungsmaterials +/-50% der Viskosität des Schokoladenummantelungsmaterials beträgt, gemessen bei jeweiligen Abscheidungstemperaturen.

5. Verfahren nach einem der vorhergehenden Ansprüche, wobei das Mittenfüllungsmaterial eine Viskosität von 30 bis 150 Pas hat.

## Revendications

1. Procédé en une étape pour la préparation d'un produit de chocolat fourré en son centre, comprenant une coquille de chocolat et un fourrage central,
dans lequel un matériau de coquille de chocolat et un matériau de fourrage central sont au moins en partie co-déposés sur une surface plane pour former un précurseur, dans lequel le précurseur n'est pas confiné par les parois d'un moule, la température de dépôt du matériau de fourrage central étant égale à la température de dépôt de la coquille de chocolat, +/- 3°C, et la densité du matériau de fourrage central représentant +/- 15% de la densité du matériau de la coquille de chocolat, mesurée en présence de leurs températures de dépôt ; et
le précurseur étant refroidi pour durcir le matériau de la coquille de chocolat et former le produit de chocolat fourré en son centre,
dans lequel le précurseur est soumis à des vibrations avant le refroidissement.

2. Procédé selon la revendication 1, dans lequel la surface plane est une courroie de transport ou la surface plane est positionnée sur une courroie de transport.

3. Procédé selon les revendications 1 ou 2, dans lequel la densité du matériau de la coquille de chocolat est comprise dans l'intervalle allant de 1,2 à 1,3 g/cm³ et/ou dans lequel la densité du matériau de fourrage central est comprise dans l'intervalle allant de 0,4 à 1,3 g/cm³.

4. Procédé selon l'une quelconque des revendications précédentes, dans lequel la viscosité du matériau de fourrage central représente +/- 50% de la viscosité du matériau de la coquille de chocolat, mesurée en présence de leurs températures de dépôt respectives.

5. Procédé selon l'une quelconque des revendications précédentes, dans lequel le matériau de fourrage central a une viscosité comprise entre 30 et 150 Pas.
